# FASCICULE DE BREVET EUROPEEN

(11) **EP 1 203 056 B1**
(45) Date de publication et mention de la délivrance du brevet: **03.10.2007**
(21) Numéro de dépôt: 00958673.6
(22) Date de dépôt: 11.08.2000
(51) Int. Cl.: C09C 1/00, C08K 3/34, C09C 3/04

(54) **COMPOSITION UTILISABLE COMME CHARGE RENFORCANTE DANS LES COMPOSITIONS DE POLYMERE**
ZUSAMMENSETZUNG VERWENDBAR ALS VERSTÄRKENDER FÜLLSTOFF IN POLYMERZUSAMMENSETZUNGEN
COMPOSITION FOR USE AS REINFORCING FILLER IN POLYMER COMPOSITIONS

(30) Priorité: 13.08.1999 FR 9910636
(43) Date de publication de la demande: 08.05.2002
(73) Titulaire: RHODIA CHIMIE, 92408 Courbevoie Cédex (FR)
(72) Inventeur: Ladouce, Laurence, F-59800 Lille (FR); BOMAL, Yves, F-75018 Paris (FR)
(74) Mandataire: Delenne, Marc
(86) Numéro de dépôt international: PCT/FR2000/002307
(87) Numéro de publication internationale: WO 2001/012729

(56) Documents cités:
- EP-A- 0 018 866
- EP-A- 0 845 493
- FR-A- 2 761 692
- GB-A- 1 025 903

## Description

La présente invention est relative à une composition, utilisable comme charge renforçante dans les compositions de polymère, obtenue par séchage d'une suspension contenant des particules présentant un facteur de forme inférieur à 15 et des particules dispersibles en milieu polymère.

Elle concerne également les compositions de polymère contenant cette composition.

Enfin, elle concerne en outre les articles finis à base de ces compositions de polymère.

Il est connu d'employer des charges blanches renforçantes dans les polymères, en particulier les élastomères, notamment de la silice précipitée.

On sait, d'une manière générale, que pour obtenir les propriétés de renforcement optimales conférées par une charge, il convient que cette dernière soit présente dans la matrice polymère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec le polymère (incorporabilité de la charge) et à se désagglomérer sous la forme d'une poudre très fine (désagglomération de la charge), et où, d'autre part, la poudre issue du processus de désagglomération précité peut elle-même, à son tour, se disperser parfaitement et de façon homogène dans le polymère (dispersion de la poudre).

De plus, pour des raisons d'affinités réciproques, les particules de charge peuvent avoir une fâcheuse tendance, dans la matrice élastomère, à s'agglomérer entre elles. Ces interactions charge/charge ont pour conséquence néfaste de limiter les propriétés de renforcement à un niveau sensiblement inférieur à celui qu'il serait théoriquement possible d'atteindre si toutes les interactions charge/polymère susceptibles d'être créées pendant l'opération de mélange, étaient effectivement obtenues.

En outre, de telles interactions tendent, à l'état cru, à augmenter la raideur et la consistance des mélanges, rendant ainsi leur mise en oeuvre plus difficile.

Depuis quelques années, on utilise en particulier de la silice précipitée dispersible en milieu polymère, c'est-à-dire présentant une dispersibilité élevée dans son milieu d'application.

Des associations de charges, obtenues par mélange direct de chacune des charges sous forme solide, par exemple de la silice précipitée dispersible et de l'alumine, peuvent être également utilisées. Cependant, la dispersibilité limitée de l'une des charges dans le milieu d'application se retrouve lors de l'utilisation de l'association et les propriétés de renforcement des compositions de polymère obtenues ne sont pas toujours satisfaisantes ; on constate dans ces compositions de polymère ainsi additivées la présence d'objets agglomérés pouvant atteindre une dizaine de microns de diamètre environ, ce qui est néfaste pour les propriétés de ces compositions.

Le but de l'invention est de fournir une composition qui est préparée d'une manière particulière à partir d'au moins deux composés, l'un d'entre eux étant dispersible dans le milieu polymère, l'autre n'étant pas de préférence dispersible dans un tel milieu, et qui, utilisée en tant que charge dans des compositions de polymère confère à ces dernières un compromis de propriétés mécaniques, rhéologiques et dynamiques très satisfaisant et qui surtout procure à ces dernières des propriétés améliorées par rapport à celles obtenues en utilisant comme charge le mélange direct de chacun des composés sous forme solide.

Dans ce but, la présente invention propose une composition obtenue par séchage d'une suspension (en général aqueuse) contenant, d'une part, des particules minérales ou organiques A présentant un facteur de forme inférieur à 15 et, d'autre part, des particules minérales ou organiques B dispersibles en milieu polymère.

En général, la composition selon l'invention est préparée par séchage d'une suspension obtenue par mélange d'au moins une suspension (en général aqueuse) de particules minérales ou organiques A présentant un facteur de forme inférieur à 15 avec au moins une suspension (en général aqueuse) de particules organiques ou minérales B dispersibles en milieu polymère ; en d'autres termes, la composition selon l'invention est en général préparée par co-séchage des deux suspensions de particules A et B.

Chacune de ces deux suspensions peut être mise en oeuvre sous la forme d'une suspension directement issue du procédé de préparation des particules A ou B.

Chacune de ces deux suspensions peut également avoir été obtenue par redispersion dans un milieu liquide des particules A ou B sous forme solide (forme sèche). Les particules A et/ou B peuvent préalablement avoir subi au moins partiellement un traitement de surface.

Il peut être préférable que le mélange des deux suspensions comprenne une opération d'homogénéisation ou un traitement permettant une désagglomération des particules, comme par exemple le broyage humide, les ultrasons par exemple ; en général, cette opération d'homogénéisation consiste en une agitation mécanique.

Un agent stabilisant, par exemple un hydrocolloïde, peut éventuellement être ajouté au cours du mélange.

L'opération de séchage (ou co-séchage) peut être réalisée selon tout moyen connu en soi.

Cependant, selon un mode de réalisation très avantageux de l'invention, le séchage est effectué par atomisation (co-atomisation), c'est-à-dire par pulvérisation de la suspension dans une atmosphère chaude ("spray-drying"). La composition selon l'invention peut alors être dénommée "co-atomisat". La température de sortie de l'atomiseur employé est habituellement inférieure à 170 °C, de préférence inférieure à 140 °C ; elle est par exemple comprise entre 100 et 135 °C. Le séchage peut être mis en oeuvre au moyen de tout type d'atomiseur convenable, notamment un atomiseur à turbine, à buses ; on emploie de préférence un atomiseur à buses, en particulier à pression liquide.

La composition selon l'invention obtenue à l'issue de l'opération de séchage se présente sous forme solide (forme sèche). Elle peut se trouver, en particulier lorsque le séchage a été réalisé à l'aide d'un atomiseur à buses, sous la forme de billes sensiblement sphériques, dont la taille moyenne peut être d'au moins 80 µm, en particulier d'au moins 100 µm, par exemple d'au moins 150 µm ; cette taille est en général d'au plus 300 µm. La taille moyenne est mesurée selon la norme NF X 11507 (décembre 1970) par tamisage à sec et détermination du diamètre correspondant à un refus cumulé de 50 %.

A l'issue de l'opération de séchage, la composition obtenue peut si on le souhaite subir un broyage ou une autre étape de mise en forme comme, par exemple, une granulation, une compaction, une extrusion.

Les particules minérales ou organiques A et B utilisées au départ pour préparer la composition selon l'invention sont dispersibles dans le milieu de suspension, éventuellement si nécessaire en mettant en oeuvre un additif ou un post-traitement d'aide à la dispersion.

Les particules minérales ou organiques A présentent un facteur de forme, défini comme étant le rapport de la plus grande dimension moyenne des particules A sur la plus petite dimension moyenne des particules A, inférieur à 15, en particulier d'au plus 12.

En général, les particules A présentent une taille moyenne d'agrégats inférieure à 1 µm, en particulier inférieure à 0,8 µm, par exemple inférieure à 0,5 µm.

Les particules A utilisées au départ pour préparer la composition selon l'invention sont de préférence des particules minérales.

Ces particules A peuvent ainsi être des particules de silicoaluminate ou de dioxyde de titane.

Ces particules A peuvent être aussi des particules d'hydroxycarbonate, d'hydroxyoxycarbonate ou d'oxycarbonate d'aluminium ou de magnésium, ou des particules d'hydrotalcite.

De manière préférée, les particules A sont des particules d'alumine.

Selon une variante de l'invention, cette alumine peut notamment être obtenue par autoclavage d'une suspension de boehmite ou, de préférence, de pseudo-boehmite, notamment en présence d'au moins un acide, en particulier d'acide acétique (avec, par exemple, un rapport molaire acide acétique / Al₂O₃ compris entre 1,5 et 5, en particulier entre 2 et 4). L'autoclavage est alors en général effectué à un palier de température comprise entre 110 et 150 °C, ledit palier ayant une durée de 6 à 10 heures. Cet autoclavage peut être éventuellement suivi d'un post-traitement chimique et/ou thermique (neutralisation, calcination par exemple).

Selon une autre variante de l'invention, cette alumine est un monohydrate cristallin essentiellement sous forme boehmite, obtenu par coprécipitation d'aluminate de soude avec du sulfate d'aluminium.

Les particules A utilisées au départ pour préparer la composition selon l'invention ne sont généralement pas dispersibles dans le milieu d'application, c'est-à-dire en milieu polymère, contrairement aux particules B. Or, il a été constaté que, de manière surprenante, du fait du mode de préparation de la composition selon l'invention, la dispersibilité des particules A lors de l'utilisation de cette composition comme charge dans une composition de polymère était en général sensiblement améliorée ; ainsi il a été constaté que, sur une photographie obtenue par microscopie électronique à balayage, on ne décèle dans la composition de polymère ainsi additivée aucun ou que très peu d'agglomérat ou agrégat, alors que l'on voit une présence importante d'objets agglomérés pouvant atteindre une dizaine de microns de diamètre environ dans le cas de la composition de polymère contenant comme charge le mélange direct de particules A et de particules B sous forme solide ; la qualité de la macro dispersion des particules B, notamment dans le cas de l'alumine, dans la composition de caoutchouc peut être ainsi sensiblement améliorée.

Les particules B utilisées au départ pour préparer la composition selon l'invention sont dispersibles en milieu polymère, c'est-à-dire présentent une dispersibilité élevée dans leur milieu d'application.

Dans le cadre de l'invention, les particules A et les particules B sont de nature chimique différente (par exemple, si les particules A sont des particules de dioxyde de titane, alors les particules B ne sont pas formées de dioxyde de titane (identique ou non à celui formant les particules A)).

Les particules B consistent de préférence en des particules de silice précipitée ayant une aptitude élevée à la dispersion en milieu polymère, en particulier dans les élastomères.

Comme indiqué plus haut, ces particules de silice précipitée ayant une aptitude élevée à la dispersion dans les élastomères peuvent être mises en oeuvre, pour la préparation de la composition selon l'invention, sous la forme d'une suspension directement issue de leur procédé de préparation. Elles peuvent également être mises en oeuvre en les redispersant dans un milieu après les avoir préparées sous forme solide.

Parmi les silices précipitées convenables, on peut citer celles qui sont décrites dans ou obtenues par les procédés indiqués dans les demandes EP 0520862, WO 95/09127, WO 95/09128.

On peut par exemple choisir des particules de silice précipitées, par exemple sous forme de billes sensiblement sphériques, notamment de taille moyenne d'au moins 80 µm, possédant une distribution poreuse telle que le volume poreux constitué par les pores dont le diamètre est compris entre 175 et 275 Å représente au moins 50 % du volume poreux constitué par les pores de diamètres inférieurs ou égaux à 400 Å.

On peut aussi choisir des particules de silice précipitée possédant un facteur de désagglomération aux ultra-sons (F_{D}) supérieur à 5,5 ml et un diamètre médian (Ø₅₀), après désagglomération aux ultra-sons, inférieur à 5 µm ; de préférence, lesdites particules de silice précipitée possèdent alors en outre une distribution poreuse telle que le volume poreux constitué par les pores dont le diamètre est compris entre 175 et 275 Å représente moins 50 % du volume poreux constitué par les pores de diamètres inférieurs ou égaux à 400 Å.

On peut également choisir des particules de silice précipitée possédant un facteur de désagglomération aux ultra-sons (F_{D}) supérieur à 11 ml et un diamètre médian (Ø₅₀), après désagglomération aux ultra-sons, inférieur à 2,5 µm.

Les volumes poreux sont mesurés par porosimétrie au mercure ; la préparation de chaque échantillon se fait comme suit : chaque échantillon est préalablement séché pendant 2 heures en étuve à 200 °C, puis placé dans un récipient à essai dans les 5 minutes suivant sa sortie de l'étuve et dégazé sous vide, par exemple à l'aide d'une pompe à tiroirs rotatifs ; les diamètres de pores sont calculés par la relation de WASHBURN avec un angle de contact théta égal à 140° et une tension superficielle gamma égale à 484 Dynes/cm (porosimètre MICROMERITICS 9300).

L'aptitude à la dispersion des silices précipitées est évaluée à l'aide du test réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian Ø₅₀ que l'on obtient est d'autant plus faible que la silice présente une aptitude à la dispersion/désagglomération élevée. On détermine également le rapport (10 x volume de suspension introduite (en ml))/densité optique de la suspension détectée par le granulomètre (cette densité optique est de l'ordre de 20). Ce rapport est indicatif du taux de particules de taille inférieure à 0,1 µm qui ne sont pas détectées par le granulomètre. Ce rapport appelé facteur de désagglomération aux ultra-sons (F_{D}) est d'autant plus élevé que la silice présente une aptitude à la dispersion/désagglomération élevée.

Les particules de silice précipitée utilisables dans le cadre de l'invention peuvent présenter une surface spécifique CTAB comprise entre 50 et 240 m²/g, de préférence entre 100 et 240 m²/g, en particulier comprise entre 140 et 240 m²/g ; elle peut être ainsi comprise entre 140 et 200 m²/g, par exemple entre 140 et 170 m²/g. La surface spécifique CTAB est la surface externe déterminée selon la norme NF T 45007 (novembre 1987) (5.12).

Pour préparer la composition selon l'invention, la quantité de particules B utilisées représente 0,1 à 99,9 %, et, notamment lorsque les particules B sont des particules de silice précipitée, de préférence 50 à 98 %, par exemple 60 à 85 %, en poids par rapport à la quantité totale de particules A et B utilisées.

La composition selon l'invention trouve une application particulièrement intéressante comme charge renforçante dans les compositions de polymère. Elle confère à ces dernières un compromis de propriétés mécaniques, rhéologiques et dynamiques très satisfaisant et surtout ces propriétés sont améliorées par rapport à celles obtenues en utilisant comme charge le mélange direct de particules A et de particules B sous forme solide.

Les compositions de polymère dans lesquelles est utilisée, à titre de charge renforçante, la composition selon l'invention, et qui constituent un autre objet de l'invention, sont en général à base d'un ou plusieurs polymères ou copolymères, en particulier d'un ou plusieurs élastomères (notamment les élastomères thermoplastiques), présentant, de préférence, une température de transition vitreuse comprise entre -150 et +300 °C, par exemple entre -150 et +20 °C.

A titre de polymères possibles, on peut citer, notamment, les polymères diéniques, en particulier les élastomères diéniques.

Par exemple, on peut citer le caoutchouc naturel, les polymères ou copolymères dérivant de monomères aliphatiques ou aromatiques, comprenant au moins une insaturation (tels que, notamment, l'éthylène, le propylène, le butadiène, l'isoprène, le styrène), le polyacrylate de butyle, ou leurs associations ; on peut également citer les élastomères silicones et les polymères halogénés.

Le polymère (copolymère) peut être un polymère (copolymère) en masse, un latex de polymère (copolymère) ou bien une solution de polymère (copolymère) dans l'eau ou tout autre liquide dispersant approprié.

Lesdites compositions de polymère peuvent être vulcanisées au soufre.

En général, elles comprennent en outre au moins un agent de couplage et/ou au moins un agent de recouvrement ; elles peuvent également comprendre, entre autres, un agent anti-oxydant.

Elles ne comprennent pas de manière avantageuse d'autres charges renforçantes que la composition selon l'invention.

La proportion en poids de la composition selon l'invention dans la composition de polymère peut varier dans une gamme assez large. En général, elle représente 25 à 70 %, par exemple 35 à 60 %, de la quantité du (des) polymère(s).

La présente invention est également relative aux articles finis à base des compositions de polymère décrites précédemment. On peut citer, à titre d'articles finis, les revêtements de sols, les semelles de chaussure, les pièces de chenilles de véhicules, les enveloppes de pneumatique (en particulier les flancs et la bande de roulement de pneumatique), les galets de téléphériques, les joints d'appareils électroménagers, les gaines, les câbles, les courroies de transmission.

Les exemples suivants illustrent l'invention sans toutefois en limiter la portée.

### EXEMPLE 1

On forme une suspension ayant une teneur en Al₂O₃ de 64 g/l en mélangeant 250 g de pseudo-boehmite (obtenue par coprécipitation d'aluminate de soude avec du sulfate d'aluminium et ayant un extrait sec en Al₂O₃ de 70 %) avec 2,7 litres d'eau. Cette suspension est agitée à l'aide d'un agitateur mécanique (Rayneri Turbo test 200) à une vitesse de 2000 tours/min, pendant 20 minutes. Le pH de la suspension est alors de 7,9.

Puis, on ajoute, sous agitation, 309 g d'acide acétique et on poursuit l'agitation pendant 20 minutes. Le pH final est de 2,9 et le volume final de 3 litres. Le rapport molaire acide acétique / Al₂O₃ est de 3.

La suspension obtenue est placée dans un autoclave verré d'une capacité de 5 litres et est soumise à un autoclavage dans les conditions ci-dessous :
- vitesse d'agitation : 560 tours/min ;
- durée de montée en température : 1 heure ;
- palier de température : 130 °C ;
- durée du palier : 8 heures.

A l'issue de cette opération d'autoclavage, la suspension ainsi préparée est séchée à l'aide d'un atomiseur à buses, avec une température d'entrée et une température de sortie de l'atomiseur égales respectivement à 400 °C et 120 °C. L'alumine obtenue (sous formes de particules) est référencée AL1.

### EXEMPLE 2

On prépare une composition selon l'invention.
a) Pour cela, on remet en suspension dans l'eau l'alumine AL1 préparée dans l'exemple 1, de manière à obtenir une suspension à 58 g/l en Al₂O₃.
b) De plus, on met en oeuvre l'exemple 12 de la demande de brevet EP 0520862, excepté l'étape d'atomisation. Ainsi, la bouillie de silice précipitée obtenue à l'exemple 1 de la demande de brevet EP 0520862 est filtrée et lavée au moyen d'un filtre-presse de telle sorte que l'on récupère un gâteau de silice dont la perte au feu est de 79 % (donc un taux de matière sèche de 21 % en poids) ; ce gâteau est ensuite fluidifié par action mécanique et chimique (ajout d'une quantité d'aluminate de sodium correspondant à un rapport pondéral Al/SiO₂ de 3000 ppm) ; à l'issue de cette opération de délitage, on obtient une suspension de silice précipitée (sous forme de gâteau pompable), de pH égal à 6,3.
c) On soumet ensuite 0,99 litre de la suspension d'alumine obtenue en a) à une agitation, pendant 10 minutes, dans un agitateur Rayneri muni d'une pâle défloculeuse, à une vitesse de 2000 tours/min ; le pH de la suspension est de 3,2.
   Parallèlement, on ajoute 1 litre d'eau à 713 g de la suspension de silice précipitée obtenue en b) et la suspension ainsi préparée est soumise également à une agitation, pendant 10 minutes, dans un agitateur Rayneri muni d'une pâle défloculeuse, à une vitesse de 2000 tours/min.
d) La solution de silice précipitée obtenue en c) est ajoutée rapidement à la suspension d'alumine obtenue en c), sous agitation mécanique (Rayneri Turbo test 200). Le mélange est soumis à une agitation pendant 15 minutes (2000 tours/min). La suspension obtenue présente un pH de 3,7.
e) La suspension préparée en d) est séchée à l'aide d'un atomiseur à buses, avec une température d'entrée et une température de sortie de l'atomiseur égales respectivement à 400 °C et 120 °C. La composition obtenue est référencée C1.

### EXEMPLE 3

On prépare deux compositions de polymères :
- l'une contenant la composition C1 selon l'invention (composition 1),
- l'autre contenant un mélange direct de l'alumine AL1 et de la silice précipitée (référencée MP1) obtenue à l'issue de l'exemple 12 de la demande de brevet EP 0520862 (composition de référence R).

**Tableau 1**

| (compositions en parties, en poids) | | |
|---|---|---|
| | Composition 1 | Composition R |
| SBR ⁽¹⁾ | 100 | 100 |
| C1 | 50 | 0 |
| AL1 | 0 | 12,5 |
| MP1 | 0 | 37,5 |
| Silane Si69 ⁽²⁾ | 4 | 4 |
| Diphénylguanidine | 1,45 | 1,45 |
| Acide stéarique | 2,5 | 2,5 |
| Oxyde de zinc | 2,5 | 2,5 |
| Anti-oxydant ⁽³⁾ | 1,45 | 1,45 |
| Sulfénamide ⁽⁴⁾ | 2 | 2 |
| Soufre | 1 | 1 |

| | | |
|---|---|---|
| (1) Copolymère styrène butadiène synthétisé en solution (type Buna VSL 5525-1) contenant 27,3 % d'huile (2) Agent de couplage charge/polymère (comercialisé par la société Dégussa) (3) N-(1,3-diméthyl-butyl)-N'-phényl-p-phénylènediamine (4) N-cyclohexyl-2-benzothiazyl sulfénamide | | |

Les compositions sont préparées en travaillant thermo-mécaniquement les élastomères dans un malaxeur interne (type BRABENDER) d'un volume égal à 70 cm³, en deux étapes, avec une vitesse moyenne des palettes de 80 tours/minute, jusqu'à l'obtention d'une température de 110 °C, ces étapes étant suivies d'une étape de finition réalisée sur un mélangeur externe.

La vulcanisation des compositions est adaptée aux cinétiques de vulcanisation des mélanges correspondants.

Les propriétés des compositions sont exposées ci-après, les mesures ayant été effectuées (sur les compositions vulcanisées), selon les normes et/ou méthodes suivantes :

### Propriétés rhéologiques et de vulcanisation

- Consistance Mooney : norme NF T 43005 (mesure de Mooney Large (1 + 4) à 100 °C, à l'aide d'un viscosimètre Mooney).
- Vulcanisation : norme NF T 43015.

On utilise, notamment pour la mesure du couple mini (Cmin) et du couple maxi (Cmax) un rhéomètre Monsanto 100 S.
Ts2 correspond au temps pendant lequel le contrôle du mélange est possible ; le mélange de caoutchouc durcit à partir de Ts2 (début de la vulcanisation).
T90 correspond au temps au bout duquel 90 % de la vulcanisation ont été réalisés.

### Propriétés mécaniques

- Traction (modules, déformation rupture, contrainte rupture) : norme NF T 46002
   Les modules x % correspondent à la contrainte mesurée à x % de déformation en traction.
- Résistance au déchirement : norme DIN 53-507
- Dureté Shore A : norme ASTM D2240
   La valeur considérée est déterminée 15 secondes après l'application de la force.

### Propriétés dynamique (Effet Payne)

Les modules réel (G') et imaginaire (G") ainsi que la tangente de l'angle de perte (tan δ), définie comme le rapport de G" sur G', sont mesurés à différents taux de déformation sur un appareil de spectrométrie mécanique (Viscoanalyseur VA2000 de Metravib RDS).

Les conditions de l'essai sont les suivantes :

Les éprouvettes sont de forme parallélépipédique (longueur 6 mm, largeur 4 mm, épaisseur 2,5 mm environ). Une déformation sinusoïdale d'amplitude croissante est appliquée à une fréquence constante de 5 Hz. A chaque taux de déformation, G', G" et tan δ sont évalués. Ci-dessous, ΔG' fait référence à la différence entre le module G' mesuré à une déformation en cisaillement de 0,001 et le module G' mesuré à une déformation en cisaillement de 1 et tan δ max correspond au maximum de la tangente de l'angle de perte en fonction de la déformation.

**Tableau 2**

| | composition 1 | composition R |
|---|---|---|
| Consistance Mooney | 60 | 43 |
| Vulcanisation | | |
| Cmin (In.lb) | 10,9 | 7,4 |
| Ts2 (min) | 12 | 10 |
| T90 (min) | 41 | 39 |
| Cmax (In.lb) | 72 | 69 |
| Mécanique | | |
| Module 100 % (MPa) | 2,6 | 2,6 |
| Module 300 % (MPa) | 11,1 | 9,9 |
| Déformation rupture (%) | 490 | 460 |
| Contrainte rupture (MPa) | 20,8 | 17,9 |
| Résist. Déchirement (Kn/m) | 16,8 | 10,5 |
| Dureté Shore A | 67 | 64 |
| Dynamique (effet Payne) | | |
| ΔG' (MPa) | 11,3 | 6,8 |
| tan δ max | 0,53 | 0,49 |

On constate que la composition 1 selon l'invention présente un compromis de propriétés bien meilleur que celui de la composition de référence R.

De plus, une comparaison entre les photographies obtenues en microscopie électronique à balayage des deux compositions montre qu'on ne décèle dans la composition 1 selon l'invention aucun agglomérat ou agrégat, alors que l'on constate la présence d'objets agglomérés d'une dizaine de microns de diamètre dans le cas de la composition de référence R ; la qualité de la macro dispersion de l'alumine dans la composition de polymère est nettement améliorée dans le cas de la composition 1 selon l'invention.

### EXEMPLE 4

On introduit dans un mélangeur statique (Lightnin) les réactifs suivants, aux concentrations et débits indiqués ci-dessous :
- sulfate d'aluminium (22,75 g/l- 500 l/h)
- aluminate de soude (290 g/l - 86 l/h)

La température est maintenue à 60 °C.

En sortie du mélangeur statique, le pH est de 9 et la concentration en monohydrate d'aluminium obtenu est de 60 g/l.

Le monohydrate est ensuite introduit dans un réacteur (volume : 12 l) contenant un système d'agitation constitué par une hélice, la puissance d'agitation étant de 500 W/m³.

On y introduit de l'aluminate de soude (concentration : 290 g/l) pour maintenir le pH à 9 à 90 °C, température à laquelle on laisse mûrir le mélange pendant 3 heures.

L'alumine issue de l'étape de mûrissement est ensuite filtrée, lavée et séchée comme dans l'exemple 1.

L'alumine obtenue (référencée AL2) présente les caractéristiques suivantes /
- nature cristalline majoritaire : boehmite
- taux de cristallinité : 85 %
- Taille des cristallites : 45 Å

### EXEMPLE 5

On prépare une composition selon l'invention.
a) Pour cela, on remet dans l'eau 491 g d'alumine AL2 préparée dans l'exemple 4, de manière à obtenir 1 litre de suspension.
b) De plus, on met en oeuvre l'exemple 12 de la demande de brevet EP 0520862, excepté l'étape d'atomisation. Ainsi, la bouillie de silice précipitée obtenue à l'exemple 1 de la demande de brevet EP 0520862 est filtrée et lavée au moyen d'un filtre-presse de telle sorte que l'on récupère un gâteau de silice dont la perte au feu est de 79 % (donc un taux de matière sèche de 21 % en poids) ; ce gâteau est ensuite fluidifié par action mécanique et chimique (ajout d'une quantité d'aluminate de sodium correspondant à un rapport pondéral Al/SiO₂ de 3000 ppm) ; à l'issue de cette opération de délitage, on obtient une suspension de silice précipitée (sous forme de gâteau pompable), de pH égal à 6,3.
c) On soumet ensuite la suspension obtenue en a) à une agitation, pendant 10 minutes, dans un agitateur Rayneri muni d'une pâle défloculeuse, à une vitesse de 2000 tours/min ; le pH de la suspension est de 11. Parallèlement, on ajoute 1 litre d'eau à 713 g de la suspension de silice précipitée obtenue en b) et la suspension ainsi préparée est soumise également à une agitation, pendant 10 minutes, dans un agitateur Rayneri muni d'une pâle défloculeuse, à une vitesse de 2000 tours/min.
d) La solution de silice précipitée obtenue en c) est ajoutée rapidement à la suspension d'alumine obtenue en c), sous agitation mécanique (Rayneri Turbo test 200). Le mélange est soumis à une agitation pendant 15 minutes (2000 tours/min). La suspension est ensuite diluée de manière à ce que son volume final soit égal à 4 lites. La suspension obtenue présente un pH de 8,2.
e) La suspension préparée en d) est séchée à l'aide d'un atomiseur à buses, avec une température d'entrée et une température de sortie de l'atomiseur égales respectivement à 400 °C et 120 °C. La composition obtenue est référencée C2.

### EXEMPLE 6

On prépare, comme dans l'exemple 3, deux compositions de polymères :
- l'une contenant la composition C2 selon l'invention (composition 2),
- l'autre contenant un mélange direct de l'alumine AL2 et de la silice précipitée (référencée MP1) obtenue à l'issue de l'exemple 12 de la demande de brevet EP 0520862 (composition de référence R').

**Tableau 3**

| (compositions en parties, en poids) | | |
|---|---|---|
| | Composition 2 | Composition R' |
| SBR ⁽¹⁾ | 100 | 100 |
| C2 | 50 | 0 |
| AL2 | 0 | 12,5 |
| MP1 | 0 | 37,5 |
| Silane Si69 ⁽²⁾ | 4 | 4 |
| Diphénylguanidine | 1,45 | 1,45 |
| Acide stéarique | 2,5 | 2,5 |
| Oxyde de zinc | 2,5 | 2,5 |
| Anti-oxydant ⁽³⁾ | 1,45 | 1,45 |
| Sulfénamide ⁽⁴⁾ | 2 | 2 |
| Soufre | 1 | 1 |

| | | |
|---|---|---|
| (1) Copolymère styrène butadiène synthétisé en solution (type Buna VSL 5525-1) contenant 27,3 % d'huile (2) Agent de couplage charge/polymère (comercialisé par la société Dégussa) (3) N-(1,3-diméthyl-butyl)-N'-phényl-p-phénylènediamine (4) N-cyclohexyl-2-benzothiazyl sulfénamide | | |

Les propriétés des compositions sont exposées ci-après, les mesures ayant été effectuées (sur les compositions vulcanisées), selon les normes et/ou méthodes indiquées ci-dessus.

**Tableau 4**

| | composition 2 | composition R' |
|---|---|---|
| Consistance Mooney | 40 | 49 |
| Vulcanisation | | |
| Cmin (In.lb) | 8,1 | 8,2 |
| Ts2 (min) | 5 | 6 |
| T90 (min) | 40 | 32 |
| Cmax (In.lb) | 68 | 67 |
| Mécanique | | |
| Module 100 % (MPa) | 2,8 | 2,2 |
| Module 300 % (MPa) | 10,8 | 10,1 |
| Déformation rupture (%) | 470 | 450 |
| Contrainte rupture (MPa) | 19,5 | 17,7 |
| Résist. Déchirement (Kn/m) | 10,6 | 6,6 |
| Dureté Shore A | 65 | 63 |
| Dynamique (effet Payne) | | |
| ΔG' (MPa) | 9,1 | 5,1 |
| tan δ max | 0,56 | 0,49 |

De même, on constate que la composition 2 selon l'invention présente un compromis de propriétés bien meilleur que celui de la composition, de référence R'.

De plus, une comparaison entre les photographies obtenues en microscopie électronique à balayage des deux compositions montre qu'on ne décèle dans la composition 2 selon l'invention aucun agglomérat ou agrégat, alors que l'on constate la présence d'objets agglomérés d'une dizaine de microns de diamètre dans le cas de la composition de référence R' ; la qualité de la macro dispersion de l'alumine dans la composition de polymère est nettement améliorée dans le cas de la composition 2 selon l'invention.

## Revendications

1. Composition obtenue par séchage d'une suspension contenant, d'une part, des particules A d'alumine présentant un facteur de forme inférieur à 15 et, d'autre part, des particules B de silice précipitée dispersibles en milieu polymère.

2. Composition selon la revendication 1, **caractérisée en ce que** ladite suspension est issue du mélange d'au moins une suspension de particules A d'alumine présentant un facteur de forme inférieur à 15 et d'au moins une suspension de particules B de silice précipitée dispersibles en milieu polymère.

3. Composition selon l'une des revendications 1 et 2, **caractérisée en ce que** les particules A présentant un facteur de forme inférieur à 15 ne sont pas dispersibles en milieu polymère.

4. Composition selon l'une des revendications 1 à 3, **caractérisée en ce que** ledit séchage est effectué par atomisation.

5. Composition selon la revendication 4, **caractérisée en ce que** la température de sortie de l'atomiseur employé lors du séchage est inférieure à 170°C, de préférence inférieure à 140 °C.

6. Composition selon l'une des revendications 4 et 5, **caractérisée en ce que** le séchage est effectué au moyen d'un atomiseur à buses.

7. Composition selon l'une des revendications 1 à 6, **caractérisée en ce que** lesdites particules B sont des particules de silice précipitée possédant une distribution poreuse telle que le volume poreux constitué par les pores dont le diamètre est compris entre 175 et 275 Å représente au moins 50 % du volume poreux constitué par les pores de diamètres inférieurs ou égaux à 400 Å.

8. Composition selon l'une des revendications 1 à 6, **caractérisée en ce que** lesdites particules B sont des particules de silice précipitée possédant un facteur de désagglomération aux ultra-sons (F_{D}) supérieur à 5,5 ml et un diamètre médian (Ø₅₀), après désagglomération aux ultra-sons, inférieur à 5 µm.

9. Composition selon la revendication 8, **caractérisée en ce que** lesdites particules B sont des particules de silice précipitée possédant une distribution poreuse telle que le volume poreux constitué par les pores dont le diamètre est compris entre 175 et 275 Å représente moins de 50 % du volume poreux constitué par les pores de diamètres inférieurs ou égaux à 400 Å.

10. Composition selon l'une des revendications 1 à 9, **caractérisée en ce que** lesdites particules B sont des particules de silice précipitée possédant un facteur de désagglomération aux ultra-sons (F_{D}) supérieur à 11 ml et un diamètre médian (Ø₅₀), après désagglomération aux ultra-sons, inférieur à 2,5 µm.

11. Composition selon l'une des revendications 1 à 10, **caractérisée en ce que** lesdites particules B sont des particules de silice précipitée présentant une surface spécifique CTAB comprise entre 50 et 240 m²/g, de préférence entre 100 et 240 m²/g, en particulier entre 140 et 240 m²/g.

12. Composition selon l'une des revendications 1 à 11, **caractérisée en ce que** l'alumine est obtenue par autoclavage d'une suspension de boehmite ou de pseudo-boehmite, de préférence en présence d'au moins un acide.

13. Composition selon la revendication 12, **caractérisée en ce que** l'autoclavage est effectué à un palier de température comprise entre 110 et 150 °C, d'une durée de 6 à 10 heures.

14. Composition selon l'une des revendications 1 à 11, **caractérisée en ce que** l'alumine est un monohydrate cristallin essentiellement sous forme boehmite, obtenu par coprécipitation d'aluminate de soude avec du sulfate d'aluminium.

15. Utilisation d'une composition selon l'une des revendications 1 à 14 comme charge renforçante dans une composition de polymère.

16. Utilisation selon la revendication 15, **caractérisée en ce que** ladite composition de caoutchouc est à base d'au moins un polymère ou copolymère présentant une température de transition vitreuse comprise entre -150 et +300 °C.

17. Composition de polymère à base d'au moins un polymère ou copolymère, comprenant une charge renforçante, **caractérisée en ce que** ladite charge renforçante est constituée par la composition selon l'une des revendications 1 à 14.

18. Composition de polymère selon la revendication 17, **caractérisée en ce que** ledit polymère ou copolymère présente une température de transition vitreuse comprise entre -150 et +300 °C.

19. Composition de polymère selon l'une des revendications 17 et 18, **caractérisée en ce qu'**elle comprend en outre au moins un agent de couplage et/ou au moins un agent de recouvrement.

20. Article fini à base d'au moins une composition telle que définie dans l'une des revendications 17 à 19.

## Claims

1. Composition obtained by drying a suspension containing, on the one hand, alumina particles A having an aspect ratio of less than 15 and, on the other hand, precipitated silica particles B dispersible in a polymer medium.

2. Composition according to Claim 1, **characterized in that** said suspension is obtained from mixing at least one suspension of alumina particles A having an aspect ratio of less than 15 with at least one suspension of precipitated silica particles B dispersible in a polymer medium.

3. Composition according to either of Claims 1 and 2, **characterized in that** the particles A having an aspect ratio of less than 15 are not dispersible in a polymer medium.

4. Composition according to one of Claims 1 to 3, **characterized in that** said drying is carried out by spray drying.

5. Composition according to Claim 4, **characterized in that** the outlet temperature of the atomizer employed during the drying is less than 170°C, preferably less than 140°C.

6. Composition according to either of Claims 4 and 5, **characterized in that** the drying is carried out by means of a nozzle atomizer.

7. Composition according to one of Claims 1 to 6, **characterized in that** said particles B are precipitated silica particles having a pore distribution such that the pore volume formed by pores whose diameter is between 175 and 275 Å represents at least 50% of the pore volume formed by pores having diameters of less than or equal to 400 Å.

8. Composition according to one of Claims 1 to 6, **characterized in that** said particles B are precipitated silica particles having an ultrasonic deagglomeration factor (F_{D}) of greater than 5.5 ml and a median diameter (Ø₅₀) after ultrasonic deagglomeration of less than 5 µm.

9. Composition according to Claim 8, **characterized in that** said particles B are precipitated silica particles having a pore distribution such that the pore volume formed by pores whose diameter is between 175 and 275 Å represents at least 50% of the pore volume formed by pores having diameters of less than or equal to 400 Å.

10. Composition according to one of Claims 1 to 9, **characterized in that** said particles B are precipitated silica particles having an ultrasonic deagglomeration factor (F_{D}) of greater than 11 ml and a median diameter (Ø₅₀) after ultrasonic deagglomeration of less than 2.5 µm.

11. Composition according to one of Claims 1 to 10, **characterized in that** said particles B are precipitated silica particles having a CTAB specific surface area of between 50 and 240 m²/g, preferably between 100 and 240 m²/g and in particular between 140 and 240 m²/g.

12. Composition according to one of Claims 1 to 11, **characterized in that** the alumina is obtained by autoclaving a suspension of boehmite or pseudo-boehmite, preferably in the presence of at least one acid.

13. Composition according to Claim 12, **characterized in that** the autoclaving is carried out at a temperature hold of between 110 and 150°C for a time of 6 to 10 hours.

14. Composition according to one of Claims 1 to 11, **characterized in that** the alumina is a crystalline monohydrate, essentially in boehmite form, obtained by coprecipitating sodium aluminate and aluminium sulphate.

15. Use of a composition according to one of Claims 1 to 14 as a reinforcing filler in a polymer composition.

16. Use according to Claim 15, **characterized in that** said rubber composition is based on at least one polymer or copolymer having a glass transition temperature of between -150 and +300°C.

17. Polymer composition based on at least one polymer or copolymer, which includes a reinforcing filler, **characterized in that** said reinforcing filler consists of the composition according to one of Claims 1 to 14.

18. Polymer composition according to Claim 17, **characterized in that** said polymer or copolymer has a glass transition temperature of between -150 and +300°C.

19. Polymer composition according to either of Claims 17 and 18, **characterized in that** it furthermore includes at least one coupling agent and/or at least one covering agent.

20. Finished article based on at least one composition as defined in one of Claims 17 to 19.

## Patentansprüche

1. Zusammensetzung, die durch Trocknen einer Suspension erhalten wird, die zum einen Partikel A von Alumina, welche einen Formfaktor von kleiner 15 aufweisen, und zum anderen Partikel B von ausgefällter Silica, die in einem Polymermedium dispergierbar sind, enthält.

2. Zusammensetzung gemäß Anspruch 1, **dadurch gekennzeichnet, dass** die Suspension aus der Mischung aus wenigstens einer Suspension von Partikeln A von Alumina, welche einen Formfaktor von kleiner 15 aufweisen, und aus wenigstens einer Suspension von Partikeln B von ausgefällter Silica, die in einem Polymermedium dispergierbar sind, hervorgegangen ist.

3. Zusammensetzung gemäß einem der Ansprüche 1 und 2, **dadurch gekennzeichnet, dass** die Partikel A, welche einen Formfaktor von kleiner 15 aufweisen, nicht in einem Polynermedium dispergierbar sind.

4. Zusammensetzung gemäß einem der Ansprüche 1 bis 3, **dadurch gekennzeichnet, dass** das Trocknen durch Zerstäubung durchgeführt wird.

5. Zusammensetzung gemäß Anspruch 4, **dadurch gekennzeichnet, dass** die Ausgangstemperatur des bei dem Trocknen verwendeten Zerstäubers niedriger als 170°C, vorzugsweise niedriger als 140°C, ist.

6. Zusammensetzung gemäß einem der Ansprüche 4 und 5, **dadurch gekennzeichnet, dass** das Trocknen mittels eines Düsenzerstäubers durchgeführt wird.

7. Zusammensetzung gemäß einem der Ansprüche 1 bis 6, **dadurch gekennzeichnet, dass** die Partikel B Partikel ausgefällter Silica sind, welche eine solche Porenverteilung aufweisen, dass das Porenvolumen, das durch die Poren gebildet ist, deren Durchmesser zwischen 175 und 275 Å liegt, wenigstens 50% des Porenvolumens, das durch die Poren gebildet ist, deren Durchmesser kleiner oder gleich 400 Å ist, beträgt.

8. Zusammensetzung gemäß einem der Ansprüche 1 bis 6, **dadurch gekennzeichnet, dass** die Partikel B Partikel ausgefällter Silica sind, welche einen Faktor des Deagglomerierens mit Ultraschall (F_{D}) von mehr als 5,5 ml und nach Deagglomerieren mit Ultraschall einen mittleren Durchmesser (Ø₅₀) von kleiner als 5 µm aufweisen.

9. Zusammensetzung gemäß Anspruch 8, **dadurch gekennzeichnet, dass** die Partikel B Partikel ausgefällter Silica sind, welche eine solche Porenverteilung aufweisen, dass das Porenvolumen, das durch die Poren gebildet ist, deren Durchmesser zwischen 175 und 275 Å liegt, wenigstens 50% des Porenvolumens, das durch die Poren gebildet ist, deren Durchmesser kleiner oder gleich 400 Å ist, beträgt.

10. Zusammensetzung gemäß einem der Ansprüche 1 bis 9, **dadurch gekennzeichnet, dass** die Partikel B Partikel ausgefällter Silica sind, welche einen Faktor des Deagglomerierens mit Ultraschall (F_{D}) von mehr als 11 ml und nach Deagglomerieren mit Ultraschall einen mittleren Durchmesser (Ø₅₀) von kleiner als 2,5 µm aufweisen.

11. Zusammensetzung gemäß einem der Ansprüche 1 bis 10, **dadurch gekennzeichnet, dass** die Partikel B Partikel ausgefällter Silica sind, welche eine spezifische Oberfläche CTAB zwischen 50 und 240 m²/g, vorzugsweise zwischen 100 und 240 m²/g, insbesondere zwischen 140 und 240 m²/g, aufweisen.

12. Zusammensetzung gemäß einem der Ansprüche 1 bis 11, **dadurch gekennzeichnet, dass** die Alumina durch Autoklavenbehandlung einer Böhmit- oder Pseudo-Böhmit-Suspension, vorzugsweise in Gegenwart wenigstens einer Säure, erhalten wird.

13. Zusammensetzung gemäß Anspruch 12, **dadurch gekennzeichnet, dass** die Autoklavenbehandlung in einem Lager mit einer Temperatur zwischen 110 und 150°C und mit einer Dauer von 6 bis 10 Stunden durchgeführt wird.

14. Zusammensetzung gemäß einem der Ansprüche 1 bis 11, **dadurch gekennzeichnet, dass** die Alumina ein kristallines Monohydrat im Wesentlichen in Form von Böhmit ist, das durch Co-Ausfällen von Aluminat von Natriumcarbonat mit Aluminiumsulfat erhalten wird.

15. Verwendung einer Zusammensetzung gemäß einem der Ansprüche 1 bis 14 als verstärkender Füllstoff in einer Polymerzusammensetzung.

16. Verwendung gemäß Anspruch 15, **dadurch gekennzeichnet, dass** die Kautschukzusammensetzung auf Basis wenigstens eines Polymers oder Copolymers ist, welches eine Glasübergangstemperatur zwischen -150°C und 300°C aufweist.

17. Polymerzusammensetzung auf Basis wenigstens eines Polymers oder Copolymers, welche einen verstärkenden Füllstoff aufweist, **dadurch gekennzeichnet, dass** der verstärkende Füllstoff aus der Zusammensetzung gemäß einem der Ansprüche 1 bis 14 gebildet ist.

18. Polymerzusammensetzung gemäß Anspruch 17, **dadurch gekennzeichnet, dass** das Polymer oder Copolymer eine Glasübergangstemperatur zwischen -150°C und 300°C aufweist.

19. Polymerzusammensetzung gemäß einem der Ansprüche 17 und 18, **dadurch gekennzeichnet, dass** sie des Weiteren wenigstens ein Kopplungsmittel und/oder wenigstens ein Überlappungsmittel aufweist.

20. Endprodukt auf Basis wenigstens einer Zusammensetzung wie in einem der Ansprüche 17 bis 19 definiert.
